# EUROPEAN PATENT APPLICATION

(11) **EP 3 905 603 A1**
(43) Date of publication of application: **03.11.2021**
(21) Application number: 20172445.7
(22) Date of filing: 30.04.2020
(51) Int. Cl.: H04L 12/40, H04L 12/24, H04L 12/26, H04L 29/12

(54) **DETERMINATION OF A SEQUENCE OF BUS NODES IN A MULTI-DROP COMMUNICATION BUS**

(71) Applicant: KONE Corporation, 00330 Helsinki (FI)
(72) Inventor: Huszak, Gergely, 00330 Helsinki (FI); Kattainen, Ari, 00330 Helsinki (FI); Vaskela, Mikko, 00330 Helsinki (FI)
(74) Representative: Papula Oy

(57) **Abstract**

According to an aspect, there is provided a method for determining a sequence of bus nodes in a multi-drop communication bus. The method comprises for each bus node: sending a request to the bus node using an bus node physical identifier to set its network interface to a test state having known characteristics; transmitting at least one signal to the bus node via the multi-drop communication bus; and measuring from the bus node at least one response signal caused by the at least one signal, and solving the physical order of the bus nodes in the multi-drop communication bus based on the response signals from the bus nodes.

## Description

### TECHNICAL FIELD

The present application relates to the field of communication systems. More particularly, the present application relates to determining a sequence of bus nodes in a multi-drop communication bus.

### BACKGROUND

When communication networks, for example, network utilizing multi-drop networks are set up, they need to be configured in order to function properly. These networks typically need some external means and/or information to be able to configure correctly. For example, multiple network nodes of the same kind would need manufacturing-time setup/configuration and/or hardware elements (such as jumpers, rotary switches etc.) to be able to identify their role/task in the network. If this needs to be performed manually, it makes is difficult, laborious and slow to configured networks comprising multiple network nodes. Further, even if the configuration of the network nodes could be established automatically, there is no knowledge how the network nodes are located in the network.

Thus, it would be beneficial to have a solution that would alleviate at least one of these drawbacks.

### SUMMARY

According to a first aspect, there is provided a method for determining a sequence of bus nodes in a multi-drop communication bus. The method comprises for each bus node sending a request to the bus node using an bus node physical identifier to set its network interface to a test state having known characteristics; transmitting at least one signal to the bus node via the multi-drop communication bus; and measuring from the bus node at least one response signal caused by the at least one signal, and solving the physical order of the bus nodes in the multi-drop communication bus based on the response signals from the bus nodes.

In an implementation form of the first aspect, the test state is a temporary test impedance state.

In an implementation form of the first aspect, the request comprises timing information associated with the test state, the timing information indicating duration of the test state.

In an implementation form of the first aspect, the method further comprises starting a counter when transmitting the at least one signal to each bus node; stopping the counter upon completion of measuring the at least one response signals from the bus node; and wherein solving the physical order of the bus nodes in the multi-drop communication bus comprises solving the physical order of the bus nodes in the multi-drop communication bus based on the counter and the at least one response signal associated with each of the bus nodes.

In an implementation form of the first aspect, the method further comprises solving the bus node physical identifier by: applying a physical identifier allocation strategy in which a segment coordinator uses an exclusive physical identifier and in which a special physical identifier is to be used by bus nodes detecting a usage condition, the special physical identifier being associated with a transmission opportunity; setting, by the segment coordinator, all bus nodes to a responsive state commanding them to reply a subsequent find request message; using, by the segment coordinator, at least one find request message to solve medium access control addresses of the bus nodes; querying, by the segment coordinator, physical identifiers of the bus nodes based on the medium access control addresses of the bus nodes; and assigning, by the segment coordinator, a unique physical identifier to each bus node.

In an implementation form of the first aspect, solving the physical order of the bus nodes in the multi-drop communication bus comprises solving the physical order of the bus nodes in the multi-drop communication bus based on phase difference between transmitted and received signal, amplitude difference, or the shape of the reflected signal versus the original signal.

In an implementation form of the first aspect, the multi-drop communication bus comprises a multi-drop ethernet bus.

According to a second aspect, there is provided an integrated circuit configured to perform the method of the first aspect.

According to a third aspect, there is provided an apparatus configured to perform the method of the first aspect.

According to a fourth aspect, there is provided a method for solving a bus node physical identifier, the method comprising applying a physical identifier allocation strategy in which a segment coordinator uses an exclusive physical identifier and in which a special physical identifier is to be used by bus nodes detecting a usage condition, the special physical identifier being associated with a transmission opportunity; setting, by the segment coordinator, all bus nodes to a responsive state commanding them to reply a subsequent find request message; using, by the segment coordinator, at least one find request message to solve medium access control addresses of the bus nodes; querying, by the segment coordinator, physical identifiers of the bus nodes based on the medium access control addresses of the bus nodes; and assigning, by the segment coordinator, a unique physical identifier to each bus node.

According to a fifth aspect, there is provided an integrated circuit configured to perform the method of the fourth aspect.

According to a sixth aspect, there is provided an apparatus configured to perform the method of the fourth aspect.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG. 1** illustrates a communication system according to an example embodiment.
**FIG. 2** illustrates a method for determining a sequence of bus nodes in a multi-drop communication bus according to an example embodiment.
**FIG. 3** illustrates a method for solving a bus node physical identifier according to an example embodiment.

### DETAILED DESCRIPTION

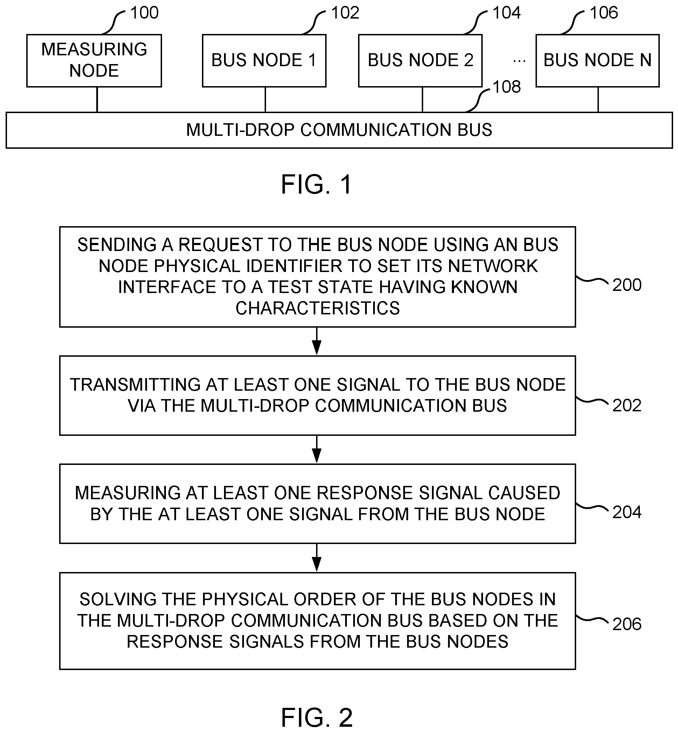

FIG. 1 illustrates a communication system according to an example embodiment. The communication system comprises a multi-drop communication bus 108 and a plurality of bus nodes 100, 102, 104, 106. The bus node 100, 102, 104, 106 may comprise any device or a system element that is configured to communicate via the multi-drop communication bus 108. One of the bus nodes 100, 102, 104, 106 may act as a measuring node 100. The multi-drop communication bus may comprise, for example, a multi-drop ethernet bus. This is, however, one possible implementation of the multi-drop communication bus 108, and other implementations are also possible to be used. The multi-drop ethernet bus 108 may comprise, for example, 10BASE-T1S multi-drop ethernet bus.

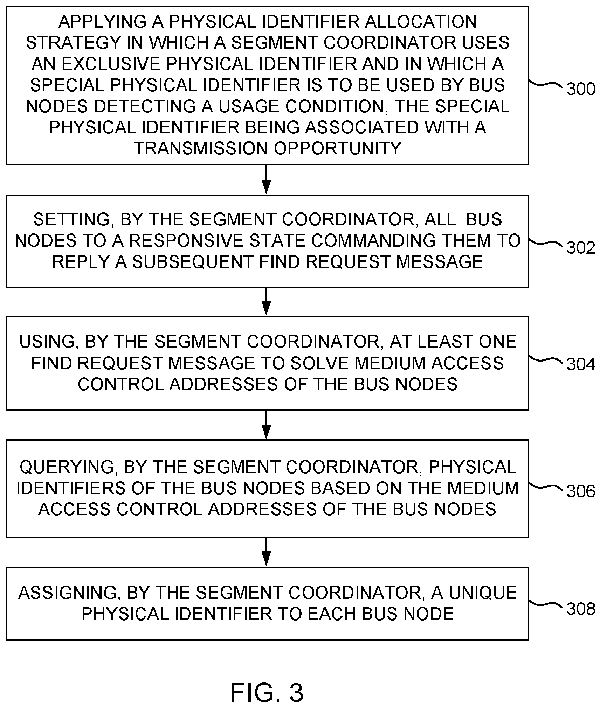

The operation of the communication system is now discussed in more detail together with FIGS. 2 and 3.

FIG. 2 illustrates a method for determining a sequence of bus nodes 100, 102, 104, 106 in a multi-drop communication 108 bus according to an example embodiment. One of the bus nodes 100, 102, 104, 106 acts as a measuring node 100.

At 200, the measuring node 100 sends a request to a selected bus node, for example, the bus node 102, using a physical identifier of the bus node to set its network interface, for example, a medium-dependent interface (MDI) in the case of ethernet, to a test state having known characteristics. The test state may refer, for example, to a state in which the network interface has known reflectiometric performance, for example, an impedance. An end result of the test state may be, for example, termination, bias, pull or a specific signal being output by the bus node's 102 line drive. In an example embodiment, the request from the measuring node 100 may comprise timing information associated with the test state, the timing information indicating duration of the test state. In another example embodiment, the bus node 102 may time itself in accordance with a known pattern or timing.

The measuring node 100 may also set a detector method (for example, a threshold for voltage/energy, or a shape of pulse dispersion) on the signal that will reflect from the bus nodes. The measuring node 100 may also set an initial delay, before the expiration of which a detector will not trigger, even if conditions set up earlier (i.e. a threshold for voltage/energy, or a shape of pulse dispersion) are not met.

At 202 the measuring node 100 is configured to transmit at least one signal to the bus node 102 via the multi-drop communication bus 108 and to start a counter. The at least one signal may comprise a specific test pulse (for example, a time domain reflectometry (TDR) pulse or a frequency domain reflectometry (FDR) pulse), a DC voltage signal or a normal transmitted data signal. In addition to transmitting the at least one signal and if the initial delay was set, the measuring node 100 may be configured to start counting the initial delay. When the initial delay expires, the measuring node 100 will automatically start the counter. If the initial delay was not set earlier, the measuring node 100 starts the counter directly. The measuring node 100 may be configured to use a long delay line or some other comparable technique that can collect a number of samples of the reflected signal. When the counter is active, the long delay line is ready to capture a reflected signal.

At 204 the measuring node 100 is configured to measure from the bus node 102 at least one response signal caused by the transmitted at least one signal. In an example embodiment, the measuring node 100 may be configured to command the long delay line to capture the reflected signal, i.e. the response signal.

The steps 200, 202 and 204 are repeated separately for each remaining bus node 104, 106.

At 206 the measuring node 100 is configured to solve the physical order of the bus nodes 102, 104, 106 in the multi-drop communication bus 108 based on the response signals from the bus nodes 102, 104, 106. For example, the measuring node 100 may be configured to use the initial delay, counter and the content of the long delay line (for example, a phase and an amplitude of the reflected signals) for calculating the time it took the transmitted at least one signal to reflect from the artificial impedance of the bus node. Now the measuring node 100 has in its possession a vector of physical identifiers and their distances in time domain. The time domain may be mapped a spatial distance using any known solution enabling to achieve this.

Although the physical order of the bus nodes has been discussed above to be based on time, in other embodiments, other than time based solutions may be used. For example, a phase difference between a transmitted and a received signal (i.e. frequency domain reflectometry) may be used, amplitude difference may be used, and shape of the reflected signal versus the original signal may be used. Further, if a specific voltage signal is supplied, then current caused by the voltage signal could indicate the location of the node.

In an example embodiment, statistical methods on repeated measurements may be used to improve accuracy and/or resolution. Further, measurement of amplitude and distortion of the shape of the reflected signal (dispersion) may give additional information of the distance. Further, if the reflectometry's output relies on the exact wave propagation speed over the multi-drop communication bus, absolute distance measurements may require additional steps (such as calibrating cable type). An approximate or relative distance measurement would, however, still be possible (by assuming an average wave propagation speed, such as 6ns/m) . In an example embodiment, by properly selecting system parameters, the illustrated may be applied to find cable connection points (stubs, branches), discontinuities in the cable/harness or changes in previously known-good network conditions, due to aging, mechanical stress, increased connector resistance etc. Further, in networks that rely on IEEE 802.3 Clause 148, the reflectometry may be combined by the scheduling of the multi-drop communication bus segment coordinator's emission of beacon, this way avoiding collision with normal traffic and increasing the reliability of the system.

By using the above illustrated solution, the enumeration and monitoring of the network can be performed without a need for additional hardware on the bus nodes and without additional configuration at the time of manufacturing/installation or additional wire/wiring.

Further, by using the above illustrated solution, it may be not only possible to solve the order of the bus nodes, but also their relative and/or absolute distances, in time or space domain. This makes it possible to even determine a layout or a topology of the communication system by means of the inventive solution.

FIG. 3 illustrates a method for solving a physical identifier by of a bus node according to an example embodiment.

At 300 a physical identifier allocation strategy is applied in which a segment coordinator, for example, a measuring node 100, uses an exclusive physical identifier and in which a special physical identifier is to be used by the bus nodes 102, 104, 106 detecting a usage condition, the special physical identifier being associated with a transmission opportunity.

At 302, the segment coordinator sets all bus nodes 102, 104, 106 to a responsive state commanding them to reply a subsequent find request message.

At 304 the segment coordinator uses at least one find request message to solve medium access control addresses of the bus nodes 102, 104, 106.

At 306 the segment coordinator queries physical identifiers of the bus nodes 102, 104, 106 based on the medium access control addresses of the bus nodes 102, 104, 106.

At 308 the segment coordinator assigns a unique physical identifier to each bus node 102, 104, 106.

In an example embodiment, the steps 300-308 may involve three main components:
1. A physical identifier (PHY-ID) allocation/reservation strategy of the segment coordinator (SC). The SC may use PHY-ID 0.
2. PHY-ID usage strategy of the remaining (coordinated) nodes.
3. PHY-ID assignment method: This algorithm may be running in or on the top of the SC that allows enumerating any unconfigured node (UN) that is currently without a unique PHY-ID and allocating and then assigning PHY-IDs to those nodes.

In the physical identifier allocation/reservation strategy, PHY-ID #0 may be reserved for the exclusive use of the SC. The SC may reserve another special PHY-ID (SPID) to be used by any/all unconfigured nodes (UN). a transmit opportunity (TO) that belongs to this special PHY-ID (SPID) may be used by any (0-N) number of UNs. In practice, this may allow those nodes that all use the SPID to access the channel as if it was a regular (default) ethernet channel, where arbitration is dealt with by "first-come-first-served" strategy, while collisions are handled by a stochastic step-back-and retry approach (CSMA/CD). The SPID may have a constant value (for example, #1) or a variable value (for example, the number of known unique PHY-IDs plus one), depending on whether configuration of UNs should have priority over normal communication of regular nodes, or the other way around:
- Method-A. When PHY-ID #1 is used, the configuration of UNs has precedence over regular packets, and the SC starts assigning unique PHY-IDs starting from #2.
- Method-B. When a variable PHY-ID is used, regular packets have precedence over configuration of the UNs, and the SC starts assigning unique PHY-IDs starting from #1, but it may allow one extra TO for every PLCA cycle before emitting PLCA BEACON again.

Depending on local requirements, the SC may choose a mixed strategy, where, for example, after a power up, the Method-A may be used, until all nodes receive a unique PHY-ID. After this, the SC may switch to the Method-B or turns off the extra TO for some portion (0-100%) of the PLCA cycle. In an example embodiment, the SC may also maintain multiple SPIDs, to allow, for example, priority-based allocation of PHY-IDs.

In the PHY-ID usage strategy, when a bus node detects one of the following conditions (for example, after a reset), it will start using the well-known SPID to communicate normally:
- the bus node has no unique PHY-ID, i.e. the bus node is an unconfigured node (UN)
- the bus node has one, but a recurring/regular collision over the TO it belongs to is detected by it (which means the PHY-ID is not uniquely owned by the bus node, which can indicate a configuration error).

In the PHY-ID assignment method, the SC may maintain either its own algorithm to enumerate all nodes over a mixing segment, or it may permit higher-layer/host protocols to run their own algorithm that achieves this. Such an algorithm could be, for example, as follows):
- Using L2 broadcast/multicast addressing services, the SC may set all bus nodes to a "responsive" state, commanding them to answer to any subsequent find request (FR) messages. If the bus nodes are permitted to remember their PHY-ID (for example, via a local configuration database) or to have a locally configured PHY-ID (for example, via configuration pins, jumpers, rotary switches), the SC may need to have stretched PLCA cycles, up to the maximum allowed PHY-ID in the system (e.g. #255), to allow those pre-configured bus nodes to respond.
- Using L2 broadcast/multicast addressing services, the SC sends out a find request message or a sequence of those
- The SC receives the first find answer (FA) which holds that bus node's MAC address. During this stage some/all of the bus nodes may be without a unique PHY-ID, thus using the SPID, as described above. Such a condition may cause a physical collision (as the TO belonging to that SPID is operating in the CSMA/CD mode) but that is expected and may be dealt with by standard normal stochastic processes.

- The SC commands the newly discovered node not to respond to subsequent find request message.
- The SC repeats these steps until none of the bus nodes sends a find answer message. The SC then makes the assumption that it holds a complete list of MAC addresses that are in use over the multi-drop bus segment.
- In an iterative manner, the SC queries the PHY-IDs of all the bus nodes using unicast addressing services, based on the nodes' previously collected MAC addresses.
- The SC may run an algorithm that lays out a continuous (hole-free) sequence of unique PHY-ID and assigns these to the nodes. This may be done so that the minimum number of PHY-ID reconfigurations (i.e. changes) needs to be done.
- The SC may send out network commands to the bus nodes that need a new PHY-ID based on their MAC addresses. These messages set the bus nodes to start using the new PHY-ID immediately.
- When all nodes are gone through, the SC can run as a collision-less mixing segment with the PLCA.

The above illustrated solution may also be used to allocate any type of PHY-ID pattern to a bus segment. The method also not only configure unconfigured nodes, but also eliminate unintended PHY-ID collisions and unnecessary "holes" in the PHY-ID scheme that would either cause degradation of network performance or cause drop of network performance (respectively).

In an example embodiment, the functionality discussed above may be implemented, for example, by an integrated circuit.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s). Thus, the examples are not limited to any specific combination of hardware and/or software. Stored on any one or on a combination of computer readable media, the examples can include software for controlling the components of the example embodiments, for driving the components of the example embodiments, for enabling the components of the example embodiments to interact with a human user, and the like. Such computer readable media further can include a computer program for performing all or a portion (if processing is distributed) of the processing performed in implementing the example embodiments. Computer code devices of the examples may include any suitable interpretable or executable code mechanism, including but not limited to scripts, interpretable programs, dynamic link libraries (DLLs), Java classes and applets, complete executable programs, and the like. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, nonvolatile media, volatile media, transmission media, and the like.

While there have been shown and described and pointed out fundamental novel features as applied to preferred embodiments thereof, it will be understood that various omissions and substitutions and changes in the form and details of the devices and methods described may be made by those skilled in the art without departing from the spirit of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or embodiments may be incorporated in any other disclosed or described or suggested form or embodiment as a general matter of design choice.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

## Claims

1. A method for determining a sequence of bus nodes (102, 104, 106) in a multi-drop communication bus (108), the method comprising:
for each bus node (102, 104, 106):
sending a request to the bus node using a bus node physical identifier to set its network interface to a test state having known characteristics;
transmitting at least one signal to the bus node (102, 104, 106) via the multi-drop communication bus (108); and
measuring from the bus node (102, 104, 106) at least one response signal caused by the at least one signal, and
solving the physical order of the bus nodes (102, 104, 106) in the multi-drop communication bus (108) based on the response signals from the bus nodes (102, 104, 106).

2. The method of claim 1, wherein the test state is a temporary test impedance state.

3. The method of claim 1 or 2, wherein the request comprises timing information associated with the test state, the timing information indicating duration of the test state.

4. The method of any of claims 1 - 3, further comprising:
starting a counter when transmitting the at least one signal to each bus node (102, 104, 106);
stopping the counter upon completion of measuring the at least one response signals from the bus node (102, 104, 106); and
wherein solving the physical order of the bus nodes (102, 104, 106) in the multi-drop communication bus (108) comprises solving the physical order of the bus nodes (102, 104, 106) in the multi-drop communication bus (108) based on the counter and the at least one response signal associated with each of the bus nodes (102, 104, 106).

5. The method of any of claims 1 - 4, wherein solving the physical order of the bus nodes (102, 104, 106) in the multi-drop communication bus (108) comprises solving the physical order of the bus nodes (102, 104, 106) in the multi-drop communication bus (108) based on phase difference between transmitted and received signal, amplitude difference, or the shape of the reflected signal versus the original signal.

6. The method of any of claims 1 - 5, further comprising solving the bus node physical identifier by:
applying a physical identifier allocation strategy in which a segment coordinator uses an exclusive physical identifier and in which a special physical identifier is to be used by bus nodes detecting a usage condition, the special physical identifier being associated with a transmission opportunity;
setting, by the segment coordinator, all bus nodes (102, 104, 106) to a responsive state commanding them to reply a subsequent find request message;
using, by the segment coordinator, at least one find request message to solve medium access control addresses of the bus nodes (102, 104, 106);
querying, by the segment coordinator, physical identifiers of the bus nodes based on the medium access control addresses of the bus nodes (102, 104, 106); and
assigning, by the segment coordinator, a unique physical identifier to each bus node (102, 104, 106).

7. The method of any of claims 1 - 6, wherein the multi-drop communication bus (108) comprises a multi-drop ethernet bus.

8. An integrated circuit configured to perform the method of any of claims 1 - 7.

9. An apparatus configured to perform the method of any of claims 1 - 7.
